# EUROPEAN PATENT APPLICATION

(11) **EP 1 962 405 A2**
(43) Date of publication of application: **27.08.2008**
(21) Application number: 08381007.7
(22) Date of filing: 18.02.2008
(51) Int. Cl.: H02J 7/00

(54) **Multiple charger for mobile terminals**

(30) Priority: 22.02.2007 ES 200700397 U
(71) Applicant: Jovenes Promesas Asociadas, S.L., 29650 Mijas Málaga (ES)
(72) Inventor: Bonilla Jurado, Jorge, 29650 Mijas - Málaga (ES); Bonilla Jurado, Andrés, 29650 Mijas - Málaga (ES)
(74) Representative: Urizar Anasagasti, Jesus Maria

(57) **Abstract**

1.- A multiple charger for mobile terminals, specifically mobile telephones of the most common brands, characterized in that it comprises a display cabinet (1) having an area (2) closed to the user which houses a power supply source at different voltages and a series of charge connectors (5) adapted to the different terminal types (6) included in other drawers (3), provided with respective doors (4) which identify the brand of the terminal adapted to the connecter therein, autonomous means for closing by means of a key being provided.

## Description

### Object of the Invention

The present model relates to a multiple charger for mobile terminals, specifically mobile telephones of the most common brands, or for other terminal types, such as electronic phonebooks, MP3 players, etc., which is placed in a public place in which the user can leave his or her equipment charging without the risk of robbery or manipulation.

This model solves the need that certain people on the go have, i.e. salesmen, distributors, businessmen, etc. of charging their mobile halfway through the workday, and not always having the charger available; this service is needed in restaurants and bars.

### Background of the Invention

There are currently individual chargers for each type of terminal and chargers which are coupled to the car. Through document ES-1063174 a multiple charger of public use for portable devices is known comprising a casing which houses therein a power supply source and multiple charge, which is connected to a series of electric connectors for different types of devices, such as mobile telephones, electronic phonebooks, portable computers and others, a collection and selection device in order to pay for the service, said collection device being connected to a device for controlling said power source allowing the user, after paying the fee, to connect his or her device to one of the connectors for its electric supply and/or recharging.

### Description of the Invention

In order to solve the problem set forth a display cabinet has been created containing an opaque upper receptacle which contains therein the different outlets which the chargers are plugged into.

This cabinet further has lower receptacles made of a transparent material, each one containing the terminal of a charger and a closing door, each one of which indicates the brand of the mobile that can be charged and has a lock with a key.

This cabinet is located in the restaurant, bar or hotel in sight of the clients, such that when someone requests this service the key to the corresponding charge is provided; the owner of the mobile can thus charge his or her mobile, having it in sight and under lock and key in order to prevent anyone from stealing it.

### Description of the Drawings

To complement the description being made and for the purpose of aiding to better understand the features of the invention, a set of drawings is attached to the present specification in which the following has been depicted with an illustrative and non-limiting character:

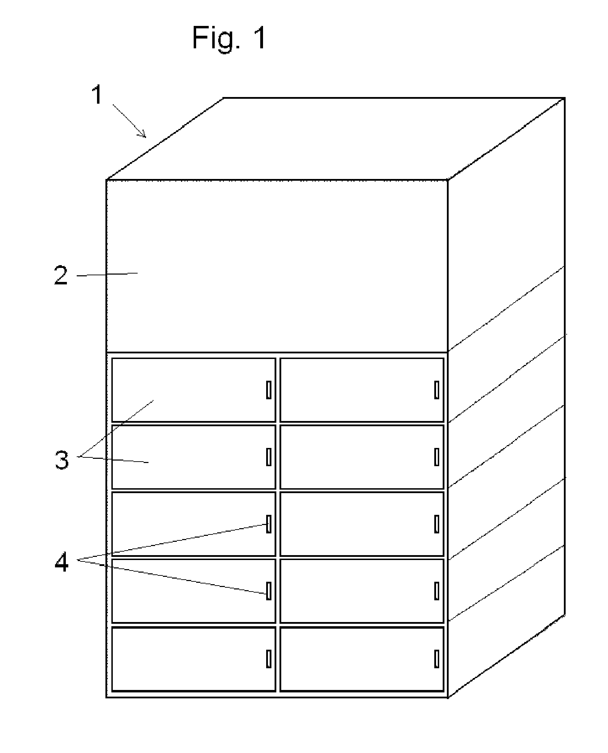

Figure 1 shows a general perspective view of a cabinet containing a multiple charger with the features of this model.

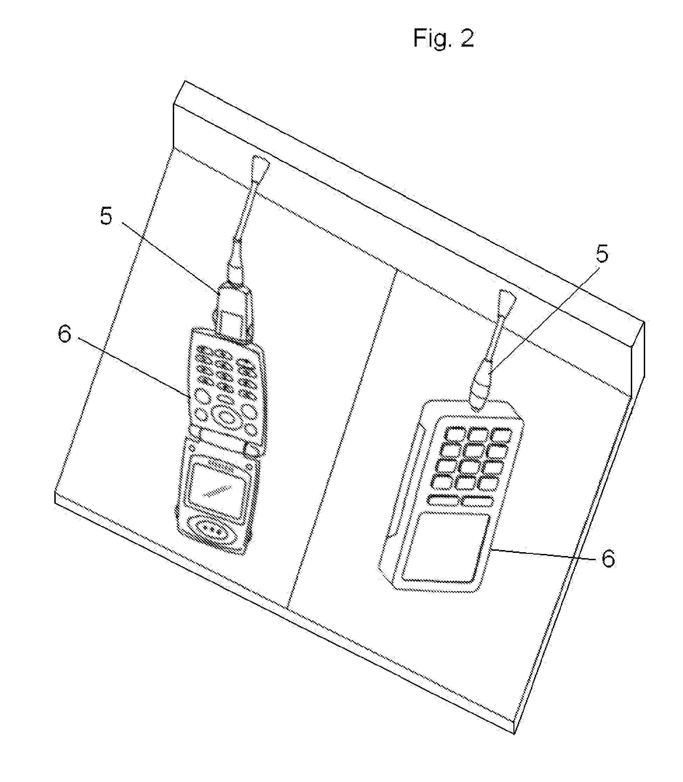

Figure 2 depicts a schematic perspective view of two different mobile models which are being charged in this apparatus.

### Preferred Embodiment of the Invention

As can be observed in the referenced drawings, the multiple charger for mobile terminals object of this model comprises a display cabinet (1) having an upper area (2) closed to the user which houses a power supply source at different voltages and a series of charge connectors (5) adapted to the different terminal types (6). Each one of these connectors is included in one of the drawers (3) in which the user connects his or her mobile, for the purpose of which the doors are identified with the brand of the terminal adapted to the connector therein. Each one of these doors is provided with autonomous means for closing by means of a key.

Having sufficiently described the nature of the invention as well as a preferred embodiment, it is hereby stated for all intents and purposes that the materials, shape, size and arrangement of the described elements can be modified, provided that it does not involve an alteration to the essential features of the invention which are claimed below.

## Claims

1. A multiple charger for mobile terminals, specifically mobile telephones of the most common brands, **characterized in that** it comprises a display cabinet (1) having an area (2) closed to the user which houses a power supply source at different voltages and a series of charge connectors (5) adapted to the different terminal types (6) included in other drawers (3), provided with respective doors (4) which identify the brand of the terminal adapted to the connecter therein, autonomous means for closing by means of a key being provided.
